# EUROPEAN PATENT APPLICATION

(11) **EP 2 254 336 A1**
(43) Date of publication of application: **24.11.2010**
(21) Application number: 10163036.6
(22) Date of filing: 17.05.2010
(51) Int. Cl.: H04N 7/24, H04N 7/16

(54) **Method for providing streaming service, method for receiving streaming service, streaming service providing server, and client device**

(30) Priority: 22.05.2009 KR 20090045095
(71) Applicant: SAMSUNG ELECTRONICS CO., LTD., Suwon-si Gyeonggi-do 442-742 (KR)
(72) Inventor: Choi, Jun-hae, Gyeonggi-do (KR); Cho, Jung-yon, Seoul (KR)
(74) Representative: Fearnside, Andrew Simon

(57) **Abstract**

A method for providing a streaming service, a method for receiving a streaming service, a streaming service providing server, and a client device are disclosed. In a method for providing a streaming service, if a streaming service providing server receives a streaming service request for a second broadcasting channel from a second client while streaming multimedia content provided from a tuned first broadcasting channel to a first client, the streaming service providing server may transmit a channel change notification message (S346) containing second broadcasting channel information to the first client. Accordingly, a user can recognize a change of channel by another user.

## Description

### CROSS-REFERENCE TO RELATED APPLICATIONS

This application claims priority from Korean Patent Application No. 10-2009-0045095, filed on May 22, 2009 in the Korean Intellectual Property Office, the disclosure of which is incorporated herein by reference in its entirety.

### BACKGROUND OF THE INVENTION

### 1. Field of the Invention

Apparatuses and methods consistent with the present invention relate to a method for providing a streaming service, a method for receiving a streaming service, a streaming service providing server, and a client device, and more particularly though not exclusively, to a method for providing a streaming service of content received through a broadcasting channel in a home network, a method for receiving a streaming service, a streaming service providing server, and a client device.

### 2. Description of the Related Art

As communication technology has developed and ubiquitous technology has been generalized, there are more homes having a home network system. According to development of diverse technologies for the home network, the demand for a standard for uniting and managing such diverse technologies has increased. A representative standard for the home network is Digital Living Network Alliance (DLNA).

DLNA is a home network standard collaboration organization founded in 2004, including Samsung Electronics, LG Electronics, Fujitsu, HP, IBM, NEC, SONY, Microsoft, Nokia, Panasonic, and Philips as members. If there is a laptop computer or a digital television supporting DLNA, a user can view a movie stored in a desktop computer through the laptop computer or the digital television in a living room without an external hard disk or a DivX player.

However, in DLNA, when a currently streaming channel is changed by another user, there is no way to recognize it. In addition, if a currently streaming channel is changed by another user, a screen of a client device of the original user is turned off or a streaming service of the client device is suddenly terminated. Accordingly, the user may think that the client device is broken down.

Therefore, there is a need for methods for a user to recognize that a channel has been changed by another user when many users use a streaming service across the home network.

### SUMMARY OF THE INVENTION

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above. According to the present invention there is provided an apparatus and method as set forth in the appended claims. Other features of the invention will be apparent from the dependent claims, and the description which follows.

An aspect of the present invention provides a method for providing a streaming service by transmitting a channel change notification message including information on a change channel to a client device if another client device changes a channel, a method for receiving a streaming service, a streaming service providing server, and a client device, so that a user can recognize a change of channel by another user.

According to an exemplary aspect of the present invention, there is provided a method for providing a streaming service using a server which communicates with a first client and a second client, the method including tuning to a first broadcasting channel if the server receives a streaming service request for a first broadcasting channel from the first client, streaming multimedia content provided from the tuned first broadcasting channel to the first client, changing a broadcasting channel being tuned from the first broadcasting channel to a second broadcasting channel if the server receives a streaming service request for the second broadcasting channel from the second client, streaming multimedia content provided from the tuned second broadcasting channel to the second client, and transmitting a channel change notification message containing second broadcasting channel information to the first client.

The second broadcasting channel information may include a Uniform Resource Locator (URL) of the second broadcasting channel.

The method may further include streaming the multimedia content provided from the second broadcasting channel to the first client.

The second broadcasting channel information may be contained in a Hypertext Transfer Protocol (HTTP) header.

The method for providing a streaming service may be implemented using a POST method.

The server, the first client, and the second client may be included in a home network supporting Digital Living Network Alliance (DLNA).

The server may receive multimedia content through one of the first broadcasting channel and the second broadcasting channel using a tuner.

According to another exemplary aspect of the present invention, there is provided a streaming service providing server which communicates with a first client and a second client, the streaming service providing server including a tuner which tunes to a first broadcasting channel if the streaming service providing server receives a streaming service request for a first broadcasting channel from the first client, a communication unit which streams multimedia content provided from the tuned first broadcasting channel to the first client, and a control unit which controls the tuner to change a broadcasting channel being tuned from the first broadcasting channel to a second broadcasting channel if the streaming service providing server receives a streaming service request for the second broadcasting channel from the second client, which controls the communication unit to stream multimedia content provided from the tuned second broadcasting channel to the second client, and which transmits a channel change notification message containing second broadcasting channel information to the first client.

The second broadcasting channel information may include a Uniform Resource Locator (URL) of the second broadcasting channel.

The control unit may control the communication unit to stream the multimedia content provided from the second broadcasting channel to the first client.

The second broadcasting channel information may be contained in a Hypertext Transfer Protocol (HTTP) header.

The control unit may provide a streaming service using a POST method.

The server, the first client, and the second client may be included in a home network supporting Digital Living Network Alliance (DLNA).

According to another exemplary aspect of the present invention, there is provided a method for receiving a streaming service using a client device which communicates with a streaming service providing server and a second client, the method including receiving streaming multimedia content provided from a first broadcasting channel from the streaming service providing server, and receiving a channel change notification message containing second broadcasting information from the streaming service providing server if the streaming service providing server receives a streaming service request containing the second broadcasting information from the second client.

The method may further include displaying a notification indicating that a channel has been changed if the client device receives the channel change notification message.

According to another exemplary aspect of the present invention, there is provided a client device which communicates with a streaming service providing server and a second client, and receives a streaming service, the client device including a communication unit which receives streaming multimedia content provided from a first broadcasting channel from the streaming service providing server, and a control unit which receives a channel change notification message containing second broadcasting information from the streaming service providing server if the streaming service providing server receives a streaming service request containing the second broadcasting information from the second client.

The control unit may display a notification indicating that a channel has been changed if the client device receives the channel change notification message.

According to another exemplary aspect of the present invention, there is provided a method for providing a streaming service in a home network system including a streaming service providing server, a first client, and a second client, the method including streaming, from the streaming service providing server, multimedia content provided from a first broadcasting channel to the first client, and transmitting, from the streaming service providing server, a channel change notification message containing second broadcasting channel information to the first client if the streaming service providing server receives a streaming service request for a second broadcasting channel from the second client.

### BRIEF DESCRIPTION OF THE DRAWINGS

The above and/or other aspects of the present invention will be more apparent by describing certain exemplary embodiments of the present invention with reference to the accompanying drawings, in which:

FIG. 1 is a schematic perspective view of a home network system according to an exemplary embodiment of the present invention;

FIG. 2 is a block diagram illustrating configuration of a streaming service providing server, a first client, and a second client according to an exemplary embodiment of the present invention;

FIG. 3 is a flow chart illustrating in detail a method for providing a streaming service according to an exemplary embodiment of the present invention;

FIG. 4 illustrates headers of messages of the POST method used when providing a streaming service according to an exemplary embodiment of the present invention;

FIG. 5 illustrates headers of messages when the GET method is used upon an initial request and the POST method is subsequently used according to another exemplary embodiment of the present invention;

FIG. 6 illustrates a case that the first client receives a streaming service through channel MBC according to an exemplary embodiment of the present invention;

FIG. 7 illustrates a case that the second client changes a channel to KBS according to an exemplary embodiment of the present invention; and

FIG. 8 illustrates a case that the first client and the second client receive a streaming service through channel KBS according to an exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

In the following description, like drawing reference numerals are used for like elements, even in different drawings. The matters defined in the description, such as detailed construction and elements, are provided to assist in a comprehensive understanding of the invention. However, the present invention can be practiced without those specifically defined matters. Also, well-known functions or constructions are not described in detail since they would obscure the invention with unnecessary detail.

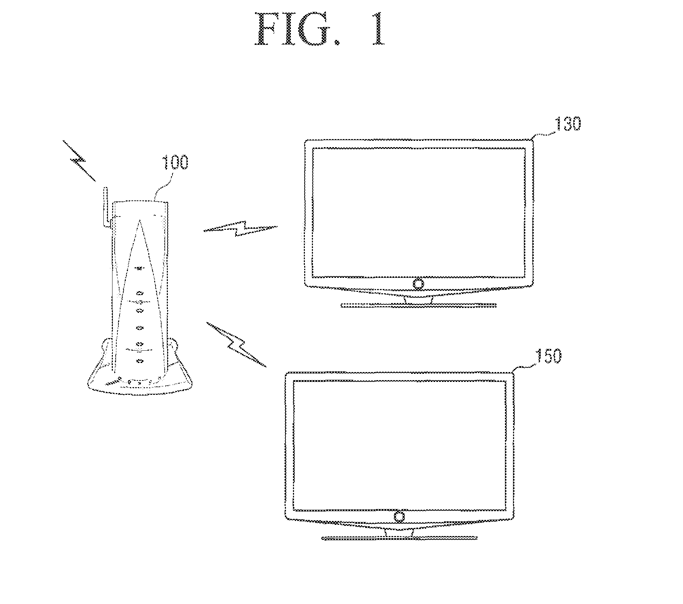

FIG. 1 is a schematic perspective view of a home network system according to an exemplary embodiment of the present invention. As illustrated in FIG. 1, the home network system includes a streaming service providing server 100, a first client 130, and a second client 150.

The streaming service providing server 100 receives multimedia content through a broadcasting channel and provides a streaming service to the first client 130 and the second client 150.

Multimedia content is content provided through broadcasting. More specifically, in TV broadcasting, multimedia content indicates broadcasting programs, and in music broadcasting, multimedia content indicates received music. Multimedia content may indicate any content received through a broadcasting channel.

The first client 130 and the second client 150 receive multimedia content from the streaming service providing server 100, display the multimedia content on a screen, and outputs sound through a speaker.

If the first client 130 transmits a streaming service request for a first broadcasting channel to the streaming service providing server 100, the streaming service providing server 100 streams multimedia content provided from the first broadcasting channel to the first client 130.

The streaming service request is implemented with a message based on Hypertext Transfer Protocol (HTTP). In addition, the streaming service request is implemented using a POST method of the HTTP.

The streaming service request includes broadcasting channel information, that is, information on a Uniform Resource Locator (URL) of a broadcasting channel. More specifically, URL information of a broadcasting channel is contained in an HTTP header of a streaming service request message. In order to include URL information of a broadcasting channel in an HTTP header, the streaming service providing server 100 supports a TunerStream header.

If the second client 150 transmits a streaming service request for a second broadcasting channel to the streaming service providing server 100 while the streaming service providing server 100 is providing a streaming service through the first broadcasting channel, the streaming service providing server 100 changes the tuned channel to the second broadcasting channel and streams multimedia content provided from the second broadcasting channel to the second client 150.

In this case, the streaming service providing server 100 transmits a channel change notification message including information on the second broadcasting channel to the first client 130. The channel change notification message is implemented with a message based on HTTP the same as the streaming service request message. In addition, the channel change notification message is implemented using a POST method of the HTTP.

The channel change notification message includes broadcasting channel information, that is, information on a Uniform Resource Locator (URL) of a broadcasting channel. More specifically, URL information of a broadcasting channel is included in an HTTP header of the channel change notification message.

If the first client 130 receives the channel change notification message, the first client 130 can recognizes that the channel being tuned has been changed by another client. Accordingly, the first client 130 may display a message to indicate that the channel has been changed on screen so that the user can input a command to select whether to maintain the streaming service through the change channel.

As described above, the user can view a broadcast program anywhere within home using the client devices 130 and 150 of the home network system, and when another user has changed a channel, the user can identify through a client device in use that the channel has been changed.

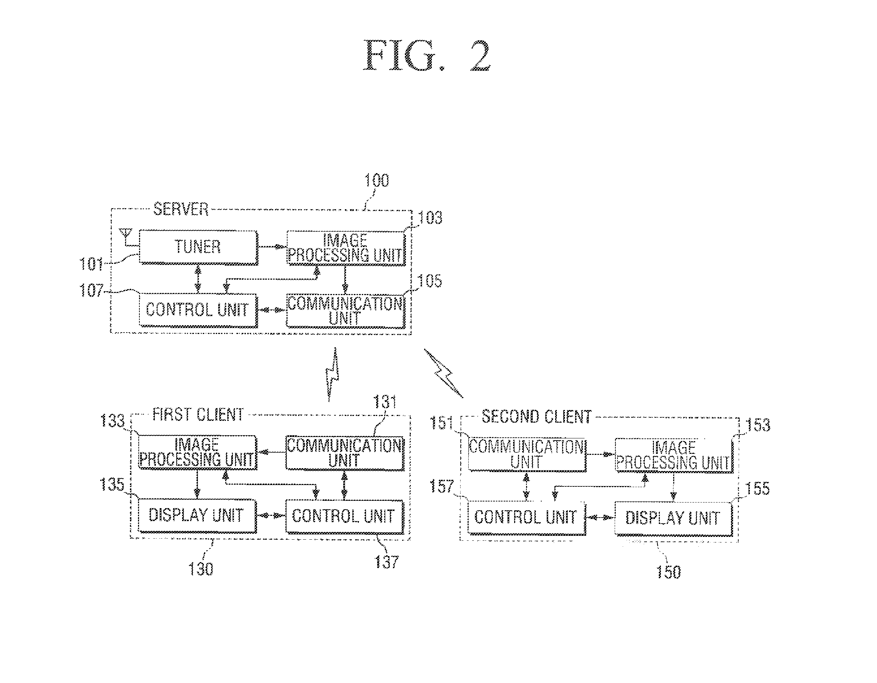

Hereinbelow, the streaming service providing server 100, the first client 130, and the second client 150 are described in detail with reference to FIG. 2. FIG. 2 is a block diagram illustrating configuration of the streaming service providing server 100, the first client 130, and the second client 150 according to an exemplary embodiment of the present invention.

As illustrated in FIG. 2, the streaming service providing server 100 includes a tuner 101, an image processing unit 103, a communication unit 105, and a control unit 107.

The tuner 101 receives a broadcast from a broadcasting station or a satellite wirelessly or using a wired line, and demodulates the broadcast. More specifically, if the tuner 101 receives a streaming service request for a broadcasting channel from the first client 130 or the second client 150, the tuner 101 tunes to the broadcasting channel.

The image processing unit 103 performs signal processing such as encoding a video signal and an audio signal of multimedia content input through the tuner 101 in a format suitable for transfer in the home network. For example, the image processing unit 103 encodes the multimedia content in a format such as Moving Picture Experts Group (MPEG) 2 or H.264.

The communication unit 105 streams multimedia content provided from the tuned broadcasting channel to at least one of the first client 130 and the second client 150.

The control unit 107 controls the overall operation of the streaming service providing server 100.

More specifically, if the streaming service providing server 100 receives a streaming service request for a second broadcasting channel from the second client 150 while streaming multimedia content of a first broadcasting channel to the first client 130, the control unit 107 controls the tuner 101 to change a channel being tuned from the first broadcasting channel to the second broadcasting channel, controls the communication unit 105 to stream multimedia content of the tuned second broadcasting channel to the second client 150, and generates a channel change notification message including information on the second broadcasting channel and transmits the message to the first client 130. If the first client 130 approves streaming of the second broadcasting channel, the control unit 107 streams the multimedia content of the second broadcasting channel to the first client 130.

As illustrated in FIG. 2, the first client 130 includes a communication unit 131, an image processing unit 133, a display unit 135, and a control unit 137.

The communication unit 131 transmits a streaming service request for a broadcasting channel to the streaming service providing server 100, and receives streaming of multimedia content provided from a broadcasting channel from the streaming service providing server 100.

The image processing unit 133 performs signal processing, such as video decoding, video scaling, audio decoding and so forth, of multimedia content received from the streaming service providing server 100 through the communication unit 131.

The display unit 135 displays the processed multimedia content on screen.

The control unit 137 controls the overall operation of the first client 130.

More specifically, if the streaming service providing server 100 receives a streaming service request including information on a second broadcasting channel from the second client 150, the control unit 137 receives a channel change notification message including the information on the second broadcasting channel from the streaming service providing server 100. If the control unit 137 receives the channel change notification message, the control unit 137 controls the display unit 135 to display a message to indicate that the channel has been changed.

Accordingly, when the second client 150 changes a channel, the first client 130 can recognize a change of channel and a change channel.

As illustrated in FIG. 2, the second client 150 includes a communication unit 151, an image processing unit 153, a display unit 155, and a control unit 157. Since configuration and function of the second client 150 are the same as those of the first client 130, detailed description is not repeated.

As described above, the streaming service providing server 100, the first client 130, and the second client 150 use a POST method when providing a streaming service, and transfer messages by containing URL information of a channel into a HTTP header. Accordingly, when the channel is changed by the second client 150, the first client 130 can recognize the change channel.

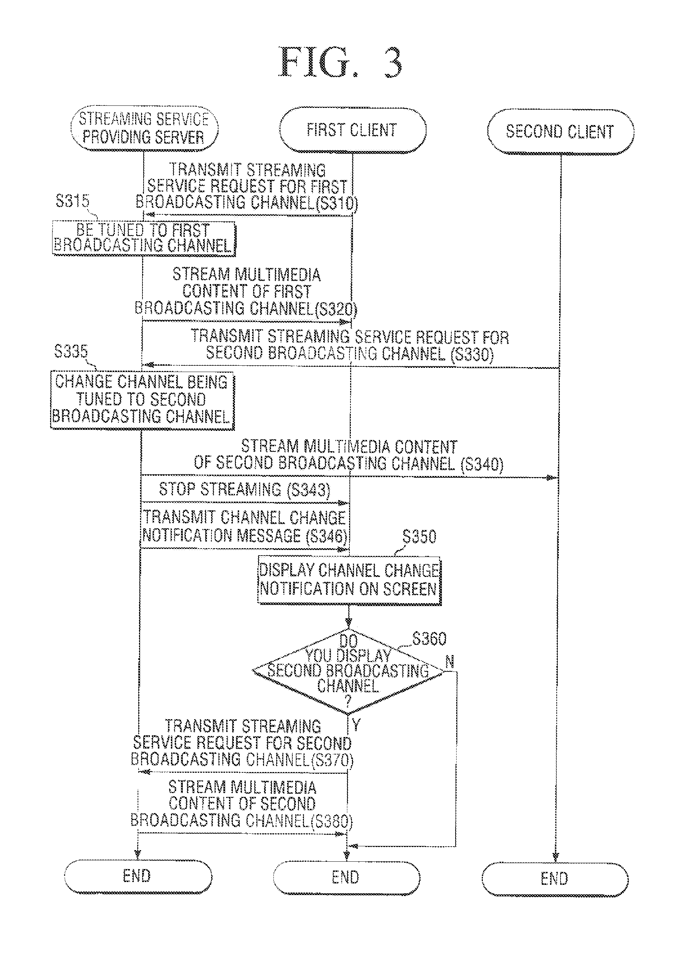

Hereinbelow, a method for providing a streaming service is described in detail with reference to FIG. 3. FIG. 3 is a flow chart illustrating in detail a method for providing a streaming service according to an exemplary embodiment of the present invention.

First, the first client 130 transmits a streaming service request for a first broadcasting channel to the streaming service providing server 100 (S310).

The streaming service request for the first broadcasting channel includes information on a URL of the first broadcasting channel. More specifically, URL information of a broadcasting channel is contained in an HTTP header of a streaming service request message. That is, the streaming service request is implemented with a message based on HTTP. In addition, the streaming service request is implemented using a POST method of the HTTP.

Subsequently, the streaming service providing server 100 tunes to the first broadcasting channel (S315), and streams the multimedia content of the first broadcasting channel to the first client 130 (S320).

If the streaming service providing server 100 receives a streaming service request for a second broadcasting channel from the second client 150 while streaming the multimedia content of the first broadcasting channel to the first client 130 (S330), the streaming service providing server 100 changes the channel being tuned to the second broadcasting channel (S335).

The streaming service request for the second broadcasting channel includes second broadcasting channel information, that is, information on a URL of the second broadcasting channel.

Subsequently, the streaming service providing server 100 streams multimedia content of the second broadcasting channel to the second client 150 (S340).

In addition, the streaming service providing server 100 stops streaming to the first client 130 (S343), and transmits a channel change notification message to the first client 130 (S346).

The channel change notification message includes second broadcasting channel information, that is, information on a URL of the second broadcasting channel. URL information of a broadcasting channel is contained in an HTTP header of a channel change notification message. That is, the channel change notification message is implemented with a message based on HTTP. In addition, the channel change notification message is implemented using a POST method of the HTTP.

Subsequently, the first client 130 displays a channel change notification on screen (S350), so the user can recognize that a channel being tuned is changed to the second broadcasting channel by the second client 150.

The first client 130 receives a user command with regard to whether to display the second broadcasting channel (S360). If the user selects displaying the second broadcasting channel (S360-Y), the first client 130 transmits a streaming service request for the second broadcasting channel to the streaming service providing server 100 (S370).

Accordingly, the streaming service providing server 100 streams multimedia content of the second broadcasting channel to the first client 130 (S380).

Following this process, the streaming service providing server 100, the first client 130, and the second client 150 in the home network system uses a POST method when providing a streaming service, and transfer messages by containing URL information of a channel into a HTTP header. Accordingly, when the channel is changed by the second client 150, the first client 130 can recognize the change channel. Consequently, when the channel is changed by the second client 150, the user can recognize to which channel the channel being tuned has been changed, through a channel change notification displayed on the first client 130.

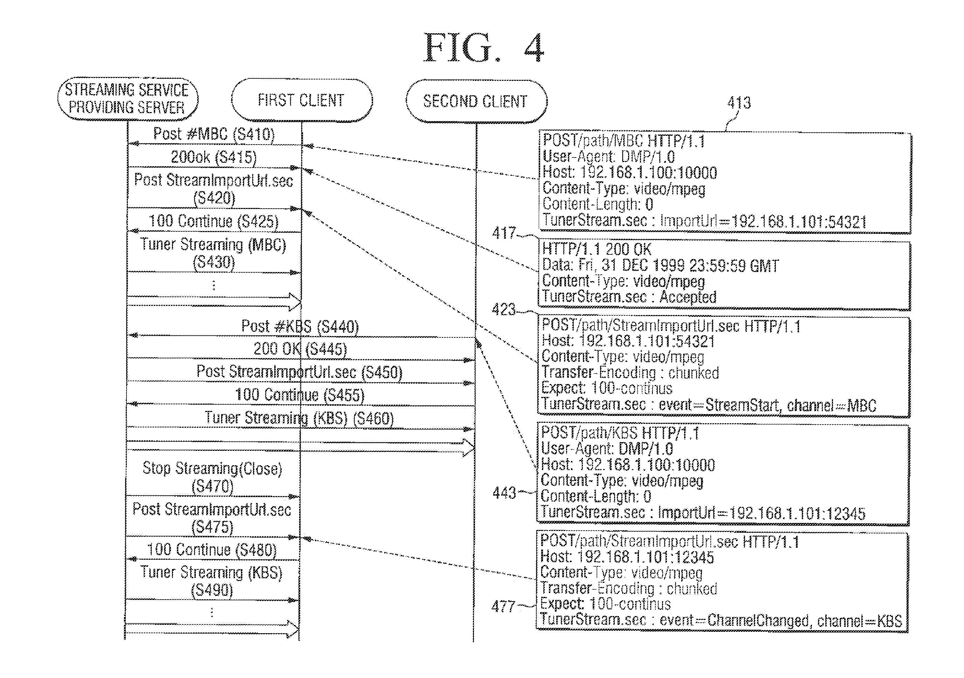

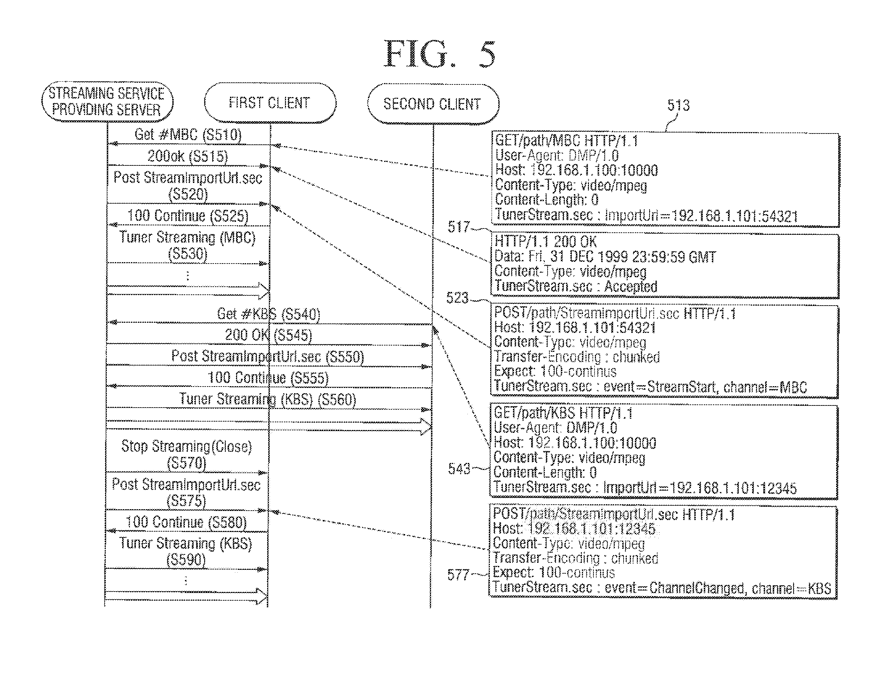

Hereinbelow, a method and messages corresponding to the method for providing a streaming service shown in FIG. 3 are described in detail with reference to FIGS. 4 and 5. FIG. 4 illustrates headers of messages of a POST method used when providing a streaming service according to an exemplary embodiment of the present invention.

The first client 130 transmits a streaming service request for broadcasting channel MBC to the streaming service providing server 100 using a POST method (S410). Example of the header of the POST method for the streaming service request is shown as a streaming service request header 413 in FIG. 4. The streaming service request header 413 contains URL information "192.168.1.101:54321" of broadcasting channel MBC.

Subsequently, the streaming service providing server 100 transmits a "200 OK" message indicating approval of the streaming service request to the first client 130 (S415). Example of the "200 OK" message is shown with reference number 417 in FIG. 4.

In addition, the streaming service providing server 100 transmits a "Post StreamImportUrl.sec" message indicating initialization of streaming to the first client 130 (S420). Example of the "Post StreamImportUrl.sec" message is shown with reference number 423 in FIG. 4. The "Post StreamImportUrl.sec" message uses the POST method and contains URL information "192.168.1.101:54321" of broadcasting channel MBC.

Later, the first client 130 transmits a "100 Continue" message indicating that the first client 130 maintains receiving streaming to the streaming service providing server 100 (S425). The streaming service providing server 100 provides a tuner streaming service for broadcasting channel MBC to the first client 130 (S430).

If the streaming service providing server 100 receives a streaming service request for broadcasting channel KBS from the second client 150 while streaming the multimedia content of MBC to the first client 130 (S440), the streaming service providing server 100 transmits a "200 OK" message indicating approval of the streaming service request to the second client 150 (S445).

Example of the streaming service request for KBS is shown as reference number 443 in FIG. 4. The streaming service request for KBS is implemented with the POST method, and contains URL information "192.168.1.101:12345" of KBS.

In addition, the streaming service providing server 100 transmits a "Post StreamImportUrl.sec" message indicating initialization of streaming to the second client 150 (S450). Subsequently, the second client 150 transmits a "100 Continue" message indicating that the second client 150 maintains receiving streaming to the streaming service providing server 100 (S455). The streaming service providing server 100 provides a tuner streaming service for KBS to the second client 150 (S460).

In addition, the streaming service providing server 100 stops streaming to the first client 130 (S470), and transmits a channel change notification message "Post StreamImportUrl.sec" to the first client 130 (S475). Example of the channel change notification message is shown with reference number 477 in FIG. 4. As shown in 477 of FIG. 4, the channel change notification message is implemented with the POST method, indicates that the channel being tuned has been changed to KBS, using "event=ChannelChanged, channel=KBS," and contains the URL information "192.168.1.101:12345" on KBS.

The first client 130 transmits a "100 Continue" message indicating that the first client 130 maintains receiving streaming to the streaming service providing server 100 (S480). The streaming service providing server 100 provides the tuner streaming service for KBS to the first client 130 (S490).

Following this process, the method for providing a streaming service shown in FIG. 3 can be implemented using the POST method.

FIG. 5 illustrates headers of messages when a GET method is used upon an initial request and the POST method is subsequently used according to another exemplary embodiment of the present invention.

Compared with FIG. 4, FIG. 5 has only a difference that streaming service requests of operations S510 and S540 are implemented using a GET method, so detailed description of FIG. 5 is not repeated.

If streaming service requests of the first client 130 and the second client 150 are implemented using the GET method, the streaming service providing server 100 provides a streaming service using the GET method when the streaming service providing server 100 does not support the TunerStream.Sec header. Accordingly, regardless of whether or not the streaming service providing server 100 supports the TunerStream.Sec header, the user can use a streaming service using client devices. However, if the streaming service providing server 100 does not support the TunerStream.Sec header, the function of notifying that a channel has been changed cannot be implemented.

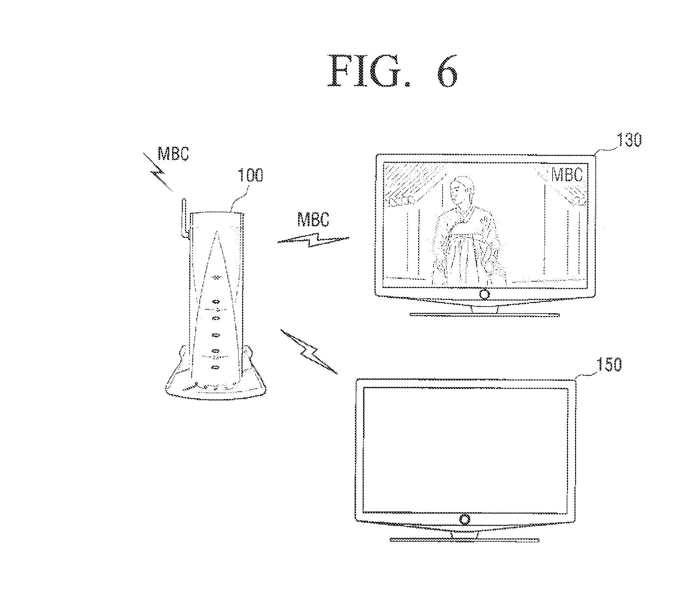

Hereinbelow, cases indicating that a channel has been changed are described with reference to FIGS. 6 to 8. FIG. 6 illustrates a case that the first client 130 receives a streaming service through channel MBC according to an exemplary embodiment of the present invention. As illustrated in FIG. 6, the streaming service providing server 100 tunes to MBC and provides a streaming service to the first client 130.

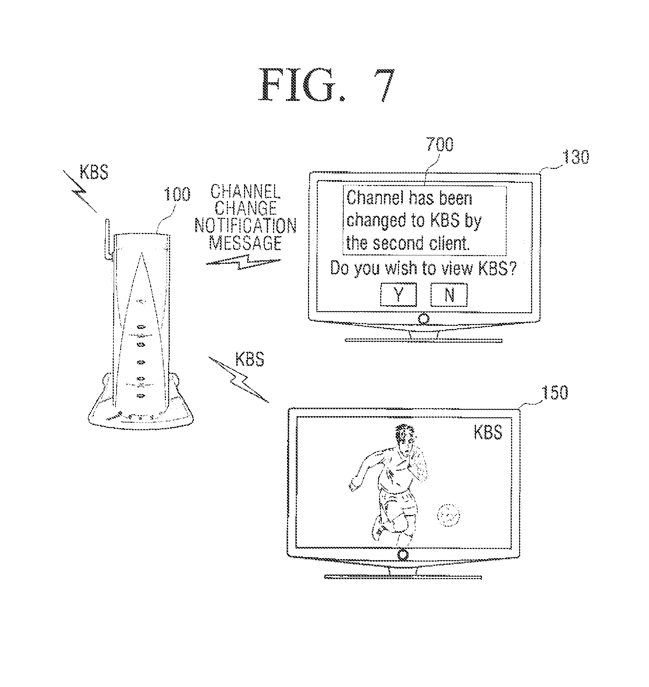

FIG. 7 illustrates a case that the second client 150 changes a channel to KBS according to an exemplary embodiment of the present invention. As illustrated in FIG. 7, if the second client 150 changes a channel to KBS, the streaming service providing server 100 transmits a channel change notification message to the first client 130. Accordingly, the first client 130 displays a notification 700 that a channel has been changed to KBS on screen. The second client 150 displays a broadcasting program of KBS on screen.

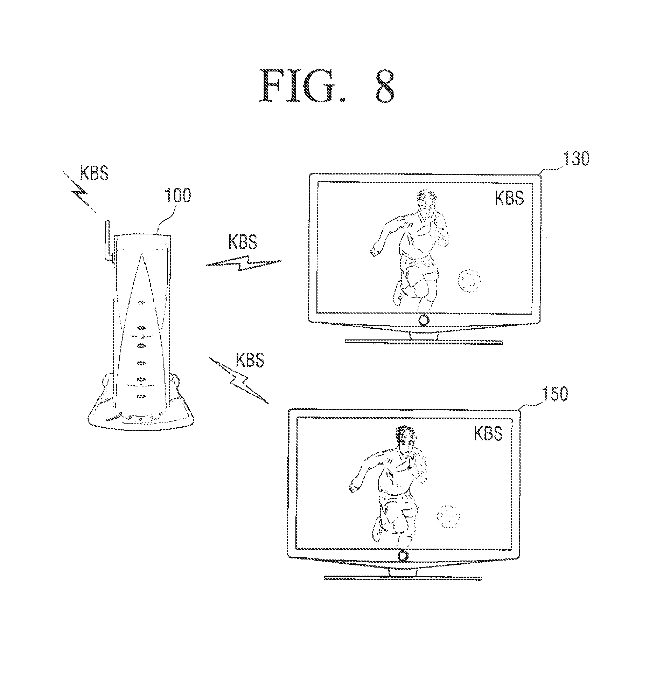

FIG. 8 illustrates a case that the first client 130 and the second client 150 receive a streaming service through channel KBS according to an exemplary embodiment of the present invention. If the user selects viewing KBS using the first client 130, the first client 130 displays the broadcasting program of KBS on screen as illustrated in FIG. 8.

As described above, if a channel has been changed by the second client 150, the streaming service providing server 100 transmits channel information on a change channel to the first client 130, so the first client 130 can recognize that a channel has been changed. Therefore, when a channel has been changed by the second client 150, the user can identify to which channel a channel has been changed using the screen indicating the channel change.

According to the diverse exemplary embodiments of the present invention, a method for providing a streaming service by transmitting a channel change notification message including information on a channel change to a client if a channel has been changed by another client, a method for receiving a streaming service, a streaming service providing server, and a client device are provided. Accordingly, the user can recognize a change of channel by another user.

The foregoing exemplary embodiments are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

## Claims

1. A method for providing a streaming service using a server which is arranged to communicate with a first client and a second client, the method comprising:
tuning to a first broadcasting channel (S315) if the server receives a streaming service request for a first broadcasting channel from the first client;
streaming multimedia content (S320) provided from the tuned first broadcasting channel to the first client;
changing a broadcasting channel being tuned (S335) from the first broadcasting channel to a second broadcasting channel if the server receives a streaming service request for the second broadcasting channel from the second client;
streaming multimedia content (S340) provided from the tuned second broadcasting channel to the second client; and
transmitting a channel change notification message (S346) containing second broadcasting channel information to the first client.

2. The method according to claim 1, wherein the second broadcasting channel information includes a Uniform Resource Locator (URL) of the second broadcasting channel.

3. The method according to claim 1 or 2, further comprising:
streaming the multimedia content (S380) provided from the second broadcasting channel to the first client.

4. The method according to any one of claims 1 to 3, wherein the second broadcasting channel information is contained in a Hypertext Transfer Protocol (HTTP) header.

5. The method according to any one of claims 1 to 4, wherein the method for providing a streaming service is implemented using a POST method.

6. The method according to any one of claims 1 to 5, wherein the server, the first client, and the second client are included in a home network supporting Digital Living Network Alliance (DLNA).

7. The method according to any one of claims 1 to 6, wherein the server receives multimedia content through one of the first broadcasting channel and the second broadcasting channel using a tuner.

8. A streaming service providing server (100) which is arranged to communicate with a first client (130) and a second client (150), the streaming service providing server comprising:
a tuner (101) which tunes to a first broadcasting channel if the streaming service providing server receives a streaming service request for a first broadcasting channel from the first client;
a communication unit (105) which streams multimedia content provided from the tuned first broadcasting channel to the first client; and
a control unit (107) which controls the tuner to change a broadcasting channel being tuned from the first broadcasting channel to a second broadcasting channel if the streaming service providing server receives a streaming service request for the second broadcasting channel from the second client, which controls the communication unit to stream multimedia content provided from the tuned second broadcasting channel to the second client, and which transmits a channel change notification message containing second broadcasting channel information to the first client.

9. The streaming service providing server according to claim 8, wherein the second broadcasting channel information includes a Uniform Resource Locator (URL) of the second broadcasting channel.

10. The streaming service providing server according to claim 8 or 9, wherein the control unit further controls the communication unit to stream the multimedia content provided from the second broadcasting channel to the first client.

11. The streaming service providing server according to any one of claims 8 to 10, wherein the second broadcasting channel information is contained in a Hypertext Transfer Protocol (HTTP) header.

12. The streaming service providing server according to any one of claims 8 to 11, wherein the control unit provides a streaming service using a POST method.

13. The streaming service providing server according to any one of claims 8 to 12, wherein the server, the first client, and the second client are included in a home network supporting Digital Living Network Alliance (DLNA).

14. A method for receiving a streaming service using a client device which communicates with a streaming service providing server and a second client, the method comprising:
receiving streaming multimedia content provided from a first broadcasting channel from the streaming service providing server; and
receiving a channel change notification message containing second broadcasting information from the streaming service providing server if the streaming service providing server receives a streaming service request containing the second broadcasting information from the second client.

15. The method according to claim 14, further comprising:
displaying a notification indicating that a channel has been changed if the client device receives the channel change notification message.
